# EUROPÄISCHE PATENTSCHRIFT

(11) **EP 0 709 611 B1**
(45) Veröffentlichungstag und Bekanntmachung des Hinweises auf die Patenterteilung: **20.05.1998**
(21) Anmeldenummer: 95113229.9
(22) Anmeldetag: 23.08.1995
(51) Int. Cl.: F16L 13/02, F16L 13/14, F16L 11/15, F16L 5/00

(54) **Einführungsvorrichtung für eine Gasleitung in ein Gebäude**
Insertion device for a gas pipe in a building
Dispositif d'introduction pour une conduite de gaz dans un immeuble

(30) Priorität: 25.10.1994 DE 4438027; 08.12.1994 DE 4443584
(43) Veröffentlichungstag der Anmeldung: 01.05.1996
(73) Patentinhaber: Jeschke, Immanuel, D-31157 Sarstedt (DE)
(72) Erfinder: Jeschke, Immanuel, D-31157 Sarstedt (DE)
(74) Vertreter: Junius, Walther, Dr.

(56) Entgegenhaltungen:
- EP-A- 0 348 685
- DE-A- 4 315 175
- US-A- 2 449 369
- US-A- 3 893 718
- US-A- 4 449 853
- US-A- 5 069 253

## Beschreibung

Die Erfindung betrifft eine Einführungsvorrichtung für eine Gasleitung in ein Gebäude, bestehend aus einem Gas führenden, aus korrosionsfestem Stahl gefertigten Wellrohr, von dem ein Teil die Gebäudewand durchsetzt und an oder in dieser auszugssicher befestigt ist und das von einem Geflecht sich kreuzender Drähte oder Litzen umgeben ist und endseitig mit diesem fest verbunden ist, wobei an das Wellrohr stirnseitig ein zylindrisches Rohr angeschweißt ist,

Eine derartige Vorrichtung ist aus der US-A-44 49 853 bekannt geworden. Die endseitige Befestigung des Geflechtes erfolgt hier mit Hilfe eines Ringes aus rostfreiem Stahl, an den das Geflecht angeschweißt ist und der seinerseits über das Wellrohrende geschoben und mit dem Wellrohr verschweißt wird.

Die Verschweißung des Geflechtes mit diesem Stahlring bereitet wegen der unterschiedlichen Materialstärken erhebliche Schwierigkeiten, die Verschweißung des Ringes mit dem Wellrohr aus dem gleichen Grunde ebenfalls, hier kommt dann zusätzlich noch die Schwierigkeit hinzu, daß das Wellrohr aus Edelstahl besonders schwierig zu schweißen ist, nicht nur wegen seiner Formgebung, sondern vor allem wegen der Notwendigkeit, jegliches farbliches Anlaufen zu verhindern, was sich durch die Verwendung von Schutzgas nur bedingt erreichen läßt, vielmehr ist gleichmäßige Einhaltung der Schweißtemperatur vonnöten. Denn die Farbanlaufstellen sind Orte einsetzender Korrosion und die ist bei Gasleitungen sicher auszuschließen.

Als weiterer Nachteil kommt bei der US-A-44 49 853 hinzu, daß das an das Ende des Wellrohres anschließende Stahlrohr durch eine innenliegende Schweißverbindung mit dem Wellrohr verbunden ist. Eine derartige Schweißverbindung ist sehr schwierig herzustellen und nur dort möglich, wo das Rohr außerordentlich kurz ist. Da eine solche Schweißung bei Gasrohren von hoher Qualität sein muß, damit nicht Gas an einer undichten Stelle austritt, ist diese Art der Verbindung praktisch undurchführbar. Es ist bei gasführenden Leitungen erforderlich, die Schweißung so vorzunehmen, wie es durch die EP 0 348 685 A1 bekannt geworden ist.

Durch die DE-A- 43 15 175 ist eine Verbindung des Endes des Wellrohres mit einem Steckkupplungsstutzen bekannt geworden, bei der eine über das Ende des Wellrohres geschobene Klemmhülse durch mindestens eine eingewalzte Rille fest miteinander verbunden sind. Für die Herstellung dieser Verbindung weist der Steckkupplungsstutzen nach außen gerichtete ringförmige Rippen auf und das verwendete Wellrohr muß endseitig zylindrisch geformt sein. Für die Herstellung dieser Verbindung müssen der Steckkupplungsstutzen und das Wellrohr aus einem thermoplastischen Kunststoff hergestellt sein, damit die Verbindung nicht nur formschlüssig, sondern auch stoffschlüssig als chemische Verbindung zustandekommt. Für Gasleitungen sind aus Kunststoff hergestellte Wellrohre nicht zugelassen, hier müssen aus Edelstahl hergestellte Wellrohre verwendet werden.

Die der vorliegenden Anmeldung zugrunde liegende Erfindung vermeidet die Nachteile des Standes der Technik. Es ist die Aufgabe der Erfindung, in einfacher Weise eine sehr preiswert herstellbare und einfach aufgebaute flexible Hauseinführungsvorrichtung für Gas zu schaffen.

Die Erfindung besteht darin, daß das Wellrohr umgebende Geflecht sich zumindest teilweise über das zylindrische Rohr erstreckt, daß das zylindrische Rohr und das dieses umgebende Geflecht am Ende des Wellrohres von einem weiteren Rohrstück dicht umgeben sind und daß das zylindrische Rohr und das dieses umgebende Geflecht sowie das Rohrstück durch mindestens eine eingewalzte Rille fest miteinander verbunden sind.

Das ist eine leicht herstellbare Möglichlichkeit der Befestigung des Geflechtes, bei deren Herstellung keine Schäden am Wellrohr, dem Geflecht und dem zylindrischen Rohr auftreten.

Um Beschädigungen des Geflechtes durch die Schweißstelle Wellrohr-zylindrisches Rohr zu vermeiden, ist es zweckmäßig, wenn das zylindrische Rohr an seinem dem Wellrohr zugewandten Ende in seinem Durchmesser verjüngt, eingezogen oder mit einem den Durchmesser verkleinernden Absatz versehen ist und wenn die ringförmige Schweißnaht einen geringeren Außendurchmesser als das zylindrische Rohr aufweist.

Korrosionserscheinungen lassen sich auch dadurch vermeiden, daß das Wellrohr und das dieses umgebende Geflecht sowie das Rohrstück am Ende des Wellrohres aus dem gleichen Stahlmaterial, vorzugsweise Edelstahl, hergestellt sind.

Vorteilhaft kann es auch sein, daß das zwischen dem Wellrohr und dem dieses umgebenden Geflecht sowie dem Rohrstück am Ende des Wellrohres eine wasser- und säureresistente Kunststoffmasse befindlich ist.

Ebenso kann es von Vorteil sein, daß zwischen dem Wellrohr und dem dieses umgebenden Geflecht ein Kunststoffmantel befindlich ist.

Zur Fortführung der Gasleitung ist es zweckmäßig, daß an das Rohrstück am Ende des Wellrohres ein weiteres Stahlrohrstück angeschweißt ist.

Zweckmäßig ist es, wenn an das Rohrstück oder an das an dieses an-geschweißte weitere Stahlrohrstück ein Verbinder Kunststoffrohr / Stahlrohr oder ein Absperrventil angeschweißt ist.

Das Wesen der Erfindung ist nachstehend anhand eines in der Zeichnung schematisch dargestellten Ausführungsbeispieles näher erläutert. Es zeigen:

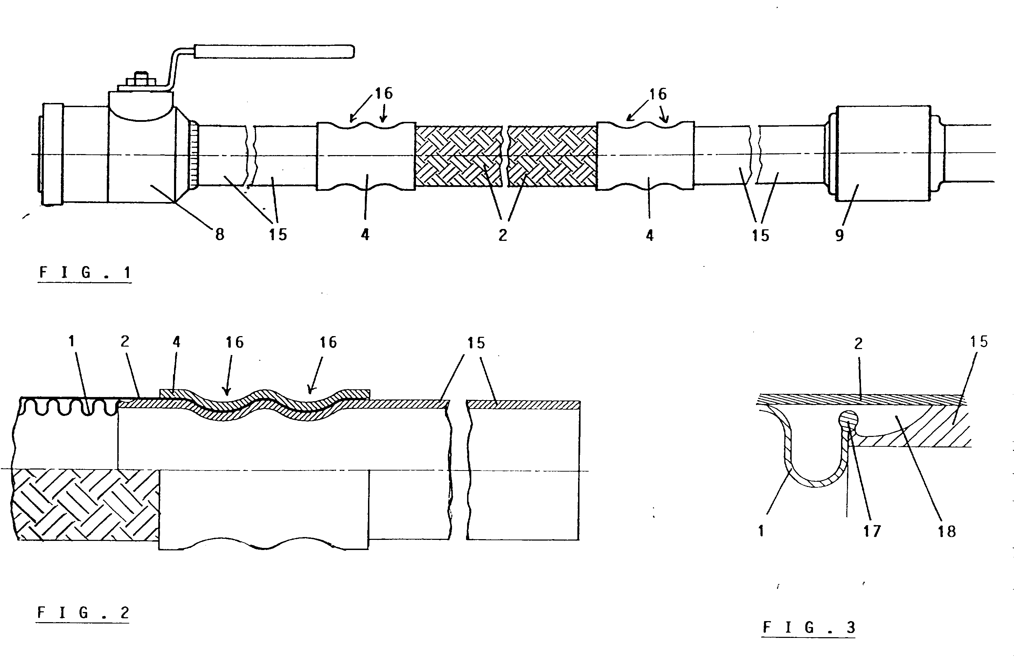

- Fig. 1: eine Ansicht einer kompletten Einführungsvorrichtung für Gas in ein Gebäude,
- Fig. 2: eine Ansicht des Überganges des Wellrohres und seiner Ummantelung in das zylindrische Rohr mit zwei eingewalzten Rillen, teilweise im Schnitt,
- Fig. 3: einen Schnitt durch die unter dem schlauchförmigen Geflecht liegenden Schweißnaht, mit der das zylindrische Rohr endseitig an das Wellrohr angeschweißt ist.

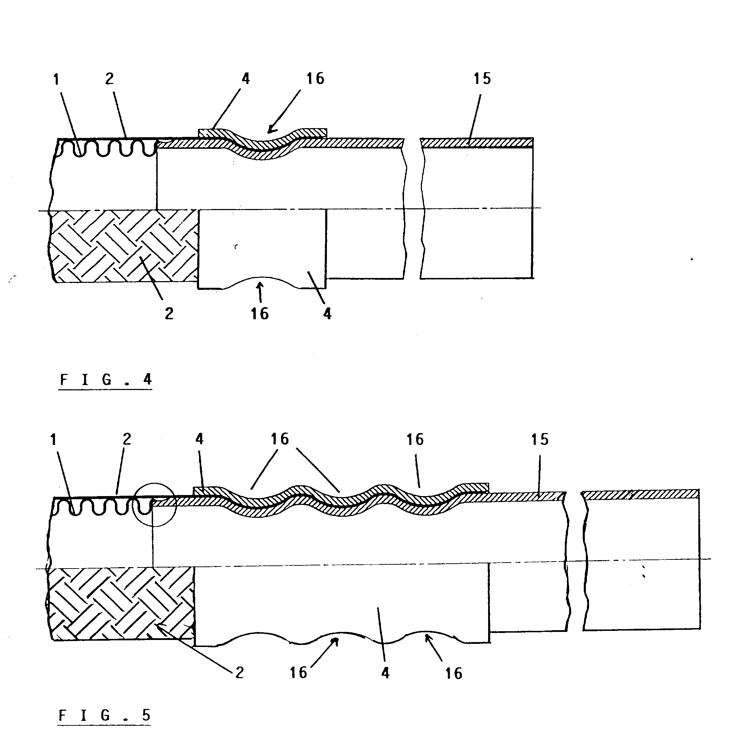

- Fig. 4: eine Ansicht des Überganges des Wellrohres und seiner Ummantelung in das zylindrische Rohr mit einer eingewalzten Rille, teilweise im Schnitt,
- Fig. 5: eine Ansicht des Überganges des Wellrohres und seiner Ummantelung in das zylindrische Rohr mit drei eingewalzten Rillen, teilweise im Schnitt.

Die Einführungsvorrichtung ist derart gestaltet, daß an das Wellrohr 1 stirnseitig ein zylindrisches Rohr 15 angeschweißt ist, daß das das Wellrohr 1 umgebende Geflecht 2 sich zumindest teilweise über dieses zylindrische Rohr 15 erstreckt, daß das zylindrische Rohr 15 und das dieses umgebende Geflecht 2 am Ende des Wellrohres 1 von einem Rohrstück 4 dicht umgeben sind und das zylindrische Rohr 15 und das dieses umgebende Geflecht 2 sowie das Rohrstück 4 durch mindestens eine eingewalzte Rille 16 fest miteinander verbunden sind.

Dieses Einwalzeh der Rille erfolgt derart, daß ein Kranz mit drei mit Preßkraft beaufschlagten Rädern um das Rohrstück 4 rotiert wird, nachdem dieses über den vom schlauchförmigen Geflecht 2 ummantelten Teil des zylindrischen Rohres 15 geschoben ist.

Zur Verstärkung der radialen Festigkeit kann es zweckmäßig sein, daß über dem schlauchförmige Geflecht 2 mindestens ein weiteres schlauchförmiges Geflecht befindlich ist.

Zur Komplettierung der Vorrichtung ist es zweckmäßig, wenn an die freie Stirnseite des zylindrischen Rohres 15 ein weiteres Rohr, ein Absperrventil 8, eine Rohrkupplung 9 oder eine sonstige Armatur angeschweißt ist.

Zur Verhinderung von durch Reibung beim Transport oder während der Herstellung entstehenden Beschädigungen ist es zweckmäßig, daß das zylindrische Rohr 15 an seinem dem Wellrohr 1 zugewandten Ende in seinem Durchmesser verjüngt, eingezogen oder mit einem den Durchmesser verkleinernden Absatz 18 versehen ist und daß die ringförmige Schweißnaht 17 einen geringeren Außendurchmesser als das zylindrische Rohr 15 aufweist.

## Patentansprüche

1. Einführungsvorrichtung für eine Gasleitung in ein Gebäude,
bestehend aus einem Gas führenden, aus korrosionsfestem Stahl gefertigten Wellrohr (1), von dem ein Teil die Gebäudewand durchsetzt und an oder in dieser auszugssicher befestigt ist und das von einem Geflecht (2) sich kreuzender Drähte oder Litzen (3) umgeben ist und endseitig mit diesem fest verbunden ist,
wobei an das Wellrohr (1) stirnseitig ein zylindrisches Rohr (15) angeschweißt ist,
dadurch gekennzeichnet,
daß das das Wellrohr (1) umgebende Geflecht (2) sich zumindest teilweise über das zylindrische Rohr (15) erstreckt,
daß das zylindrische Rohr (15) und das dieses umgebende Geflecht (2) am Ende des Wellrohres (1) von einem weiteren Rohrstück (4) dicht umgeben sind
und daß das zylindrische Rohr (15) und das dieses umgebende Geflecht (2) sowie das Rohrstück (4) durch mindestens eine eingewalzte Rille (16) fest miteinander verbunden sind.

2. Vorrichtung nach Anspruch 1,
dadurch gekennzeichnet,
daß das zylindrische Rohr (15) an seinem dem Wellrohr (1) zugewandten Ende in seinem Durchmesser verjüngt, eingezogen oder mit einem den Durchmesser verkleinernden Absatz (18) versehen ist
und daß die ringförmige Schweißnaht (17) einen geringeren Außendurchmesser als das zylindrische Rohr (15) aufweist.

3. Vorrichtung nach Anspruch 1,
dadurch gekennzeichnet,
daß das Wellrohr (1) und das dieses umgebende Geflecht (2) sowie das Rohrstück (4) am Ende des Wellrohres (1) aus dem gleichen Stahlmaterial, vorzugsweise Edelstahl, hergestellt sind.

4. Vorrichtung nach Anspruch 1,
dadurch gekennzeichnet,
daß das zwischen dem Wellrohr (1) und dem dieses umgebenden Geflecht (2) sowie dem Rohrstück (4) am Ende des Wellrohres (1) eine wasser- und säureresistente Kunststoffmasse befindlich ist.

5. Vorrichtung nach Anspruch 1,
dadurch gekennzeichnet,
daß zwischen dem Wellrohr (1) und dem dieses umgebenden Geflecht (2) ein Kunststoffmantel befindlich ist.

6. Vorrichtung nach Anspruch 1,
dadurch gekennzeichnet,
daß an das Rohrstück (4) am Ende des Wellrohres (1) ein weiteres Stahlrohrstück angeschweißt ist.

7. Vorrichtung nach Anspruch 6,
dadurch gekennzeichnet,
daß an das Rohrstück (4) oder an das an dieses an-geschweißte weitere Stahlrohrstück ein Verbinder (9), Kunststoffrohr / Stahlrohr oder ein Absperrventil (8) angeschweißt ist.

## Claims

1. Device for introducing a gas pipe into a building, consisting of a corrugated pipe (1) which is made of stainless steel and carries a gas and a part of which passes through the building wall and is secured to or in the latter so that it cannot be pulled out and which is surrounded by a mesh (2) of intersecting wires or strands (3) and is connected securely to the latter at the end, whereby a cylindrical pipe (15) is welded to the corrugated paper (1) at the front end, characterised in that the mesh (2) surrounding the corrugated pipe (1) extends at least partially beyond the cylindrical pipe (15), in that the cylindrical pipe (15) and the mesh (2) surrounding the latter are tightly surrounded by a further piece of pipe (4) at the end of the corrugated pipe (1), and in that the cylindrical pipe (15) and the mesh (2) surrounding the latter and the piece of pipe (4) are connected together securely by at least one rolled groove (16).

2. Device according to claim 1, characterised in that at its end facing the corrugated pipe (1) the cylindrical pipe (15) tapers in diameter, is constricted or provided with a shoulder (18) reducing the diameter, and in that the annular weld seam (17) has a smaller outside diameter than the cylindrical pipe (15).

3. Device according to claim 1, characterised in that the corrugated pipe (1) and the mesh (2) surrounding the latter and the piece of pipe (4) at the end of the corrugated pipe (1) are manufactured of the same steel material, preferably stainless steel.

4. Device according to claim 1, characterised in that a water-resistant and acid-resistant plastic material is located between the corrugated pipe (1) and the mesh (2) surrounding the latter and the piece of pipe (4) at the end of the corrugated pipe (1).

5. Device according to claim 1, characterised in that a plastic sheath is located between the corrugated pipe (1) and the mesh (2) surrounding the latter.

6. Device according to claim 1, characterised in that a further piece of steel pipe is welded to the piece of pipe (4) at the end of the corrugated pipe (1).

7. Device according to claim 6, characterised in that a connector (9), plastic pipe/steel pipe or a shut-off valve (8) is welded to the piece of pipe (4) or to the further piece of steel pipe welded to the latter.

## Revendications

1. Dispositif d'introduction pour une canalisation de gaz dans un bâtiment,
• constitué par un tube ondulé (1) qui véhicule le gaz et est réalisé en un acier résistant à la corrosion et dont une partie traverse le mur du bâtiment et est fixée à ou dans ce mur, de façon sûre à l'encontre d'une extraction et qui est entourée par un tissage (2) formée de fils ou de torons (3) qui se croisent, et est reliée de façon fixe, par une extrémité, à ce tissage,
• un tube cylindrique (15) étant soudé sur le côté frontal du tube ondulé (1),
caractérisé en ce
• que le tissage (2), qui entoure le tube ondulé (1), s'étend au moins en partie au-dessus du tube cylindrique (15),
• que le tube cylindrique (15) et le tissage (2), qui entoure ce tube, soient entourés d'une manière étanche à l'extrémité du tube ondulé (1) par un autre élément de tube (4), et
• que le tube cylindrique (15) et le tissage (2) entourant ce tube ainsi que l'élément de tube (4) sont reliés fermement entre eux par au moins une rainure (16) formée par laminage.

2. Dispositif selon la revendication 1, caractérisé en ce qu'au niveau de son extrémité tournée vers le tube ondulé (1), le tube cylindrique (15) a un diamètre réduit, est rétréci ou comporte une partie étagée (18), qui réduit le diamètre, et
que le cordon de soudure de forme annulaire (17) possède un diamètre extérieur inférieur à celui du tube cylindrique (15).

3. Dispositif selon la revendication 1, caractérisé en ce que le tube ondulé (1) et le tissage (2) entourant ce dernier, ainsi que l'élément de tube (4) sont réalisés, au niveau de l'extrémité du tube ondulé (1), avec le même acier, de préférence un acier spécial.

4. Dispositif selon la revendication 1, caractérisé en ce qu'une masse de matière plastique résistante à l'eau et aux acides est située entre le tube ondulé (1) et le tissage (2), qui entoure ce tube, ainsi que l'élément de tube (4).

5. Dispositif selon la revendication 1, caractérisé en ce qu'une enveloppe de matière plastique est disposée entre le tube ondulé (1) et le tissage (2) qui entoure ce tube.

6. Dispositif selon la revendication 1, caractérisé en ce qu'un autre élément de tube en acier est soudé sur l'élément de tube (4), à l'extrémité du tube ondulé (1).

7. Dispositif selon la revendication 6, caractérisé en ce qu'un raccord (9), un tube en matière plastique/un tube en acier ou une soupape de sectionnement (8) est soudé sur l'élément de tube (4) ou sur l'autre élément de tube en acier soudé au précédent.
